# EUROPÄISCHE PATENTSCHRIFT

(11) **EP 4 566 970 B1**
(45) Veröffentlichungstag und Bekanntmachung des Hinweises auf die Patenterteilung: **03.06.2026**
(21) Anmeldenummer: 24214454.1
(22) Anmeldetag: 21.11.2024
(51) Int. Cl.: B65G 1/02

(54) **REGALLAGER MIT WÄRMESTAUBLECH**
SHELVING UNIT WITH HEAT ACCUMULATION PLATE
RAYONNAGE AVEC TÔLE D'ACCUMULATION DE CHALEUR

(30) Priorität: 06.12.2023 DE 102023005018
(43) Veröffentlichungstag der Anmeldung: 11.06.2025
(73) Patentinhaber: Jungheinrich AG, 22047 Hamburg (DE)
(72) Erfinder: ELBERFELD, Jens, 84174 Eching (DE); KAILER, Manuel, 84174 Eching (DE); KAPFENBERGER, Sebastian, 84061 Ergoldsbach (DE)
(74) Vertreter: Weickmann & Weickmann PartmbB

(56) Entgegenhaltungen:
- EP-A1- 3 067 486
- EP-A1- 4 220 021
- DE-A1- 102021 209 859
- DE-B4- 102015 103 661
- DE-U1- 212013 000 171
- JP-A- H11 208 833

## Beschreibung

Die vorliegende Erfindung betrifft ein Regallager mit einer Mehrzahl von Lagerebenen, welches mit wenigstens einem Wärmestaublech ausgerüstet ist.

In Warenlagern werden häufig Regallager mit einer Mehrzahl von übereinander angeordneten Lagerebenen eingesetzt, in denen jedoch die einzelnen Lagerebenen neben den eigentlichen Aufstellbereichen bzw. Regalfächern für aufzunehmende Gegenstände auch Durchbrechungen umfassen, durch welche beispielsweise Fachwerkstreben oder ähnliche Bauteile hindurchgeführt sind.

Hierdurch ergibt sich jedoch das Problem, dass durch die entsprechenden Ausnehmungen in den Lagerebenen warme Luft relativ einfach in Richtungen von höheren Ebenen aufsteigen kann, was insbesondere im Falle eines Brandes zu gefährlichen Situationen führen kann. Hierbei ist in derartigen Regallagern und insbesondere Palettenregalen häufig als Brandschutzmaßnahme gefordert, dass entsprechende Sprinkleranlagen vorgesehen sind, welche im Falle eines Brandes und einer hiermit zusammenhängenden Erfassung einer solchen Situation durch einen Brandmelder umgehend und automatisch einen entsprechenden Löschvorgang auslösen.

Jedoch besteht in solchen Fällen aufgrund der angesprochenen Ausnehmungen in den einzelnen Lagerebenen nicht nur die Gefahr eines direkten Flammendurchschlags von unteren zu höheren Ebenen, sondern es kann durch das Vorsehen dieser Ausnehmungen auch passieren, dass die entstehende Hitze nicht ausreichend aufgestaut wird, um die entsprechenden Brandmelder bzw. Sprinklerköpfe auszulösen.

Dementsprechend ist häufig ebenfalls gefordert, dass die einzelnen Lagerebenen, meist über den angesprochenen Sprinklerleitungen, mit sogenannten Wärmestaublechen abgedeckt sind. Hierdurch wird dafür Sorge getragen, dass nicht nur die eigentliche Stellfläche der Regalfächer abgedeckt ist, sondern auch der bereits angesprochene Ständerbereich mit gegebenenfalls darin vorgesehenen Diagonal-Fachwerkstreben oder anderen darin verlaufenden Objekten, was jedoch einen erhöhten konstruktiven Aufwand bedeutet, da durch geeignete Mittel die Möglichkeit geschaffen werden muss, die entsprechenden Objekte durch die Wärmestaubleche hindurch zu führen.

Zu diesem Zweck ist beispielsweise in der DE 20 2020 104310 U1 vorgeschlagen worden, eine Wärmestau-Abdeckeinheit zur Abdeckung einer Öffnungsfläche zwischen benachbarten Regalfächern in einer Regalanlage mit wenigstens zwei Abdeckplatten auszubilden, wobei ferner wenigstens eine eine Stützstreben umschließende oder umklammernde Mittelplatte vorgesehen ist. Die entsprechende Befestigung dieser Platten kann hierbei über Nietverbindungen erfolgen.

Ferner soll auch auf die DE 20 2020 101335 U1 verwiesen sein, welche einen metallischen Gitterstruktur-Fachboden mit einer Wärmestauplatte für eine Regalanlage eines Warenlagers lehrt, wobei die Wärmestauplatte wenigstens zwei parallele eingeprägte Sicken aufweist, welche Rippen ausprägen und an Kreuzungspunkten mit der Gitterstruktur verschweißt sind.

Zudem sei auf die EP 4 220 021 A1 verwiesen, welche ein Wärmeleitblech zur Festlegung eines Rohrabschnitts an einer Haltefläche eines Wärmetauschers lehrt, sowie auf die DE 10 2015 103661 B4, welche ein Regallager mit einer Mehrzahl von Lagerebenen und einer Mehrzahl von Wärmestaublechen lehrt, welche jeweils einen Körperabschnitt und einen an dem Körperabschnitt vorgesehenen Kammbereich mit einer Mehrzahl von Kammabschnitten umfassen. Die DE 10 2015 103661 B4 offenbart ein Regallager nach dem Oberbegriff des Anspruchs 1.

Weiterhin ist bekannt, Blechstreifen an entsprechenden Regallagern vorzusehen, welche die Fachwerkstreben umschließen und ebenfalls über Nietverbindungen befestigt werden können. Hierdurch entsteht jedoch ein erhöhter Montageaufwand durch notwendige Anpassungsarbeiten vor Ort und teilweise auch mechanische Trennarbeiten in großen Arbeitshöhen. Zudem ist durch den unweigerlich auftretenden Verschnitt ein erhöhter Materialeinsatz zu erwarten und notwendige Zuschnittarbeiten sind unter Umständen in entsprechenden Schutzbereichen nicht zulässig. Außerdem zeigt sich, dass im Schadensfall individuelle Arbeiten vor Ort notwendig sein können, da es sich bei den beschriebenen Lösungen nicht um ein standardisiertes System handelt.

Dementsprechend besteht ein Bedarf nach einem einfach aufgebauten, montagefreundlichen und modularen System, welches dazu geeignet ist, Freiflächen in Regallagern auch im Bereich von Diagonal-Fachwerkstreben oder anderen dort vorliegenden Objekten den Anforderungen entsprechend überdecken zu können. Ferner ist gewünscht, dass eine entsprechende Lösung flexibel genug ist, um die in der Praxis auftretenden hohen Varianzen der entsprechenden Regalständer, Regalfachabmessungen und Regaltypen bewältigen zu können, um also unter anderem in Palettenregalen, Kragarmregalen, Shuttle-Regalen, Durchlaufregalen, Einschubregalen, Einfahrregalen, Collie-Regalen, Bockregalen, Weitspannregalen und Fachbodenregalen eingesetzt werden zu können.

Zur Lösung dieser Aufgabe und zur Behebung der oben beschriebenen Nachteile des bekannten Standes der Technik wird erfindungsgemäß ein Regallager mit einer Mehrzahl von Lagerebenen nach Anspruch 1 vorgeschlagen. Das Regallager umfasst wenigstens ein Wärmestaublech, welches wiederum einen Körperabschnitt mit einer Längsrichtung und einer Breitenrichtung, welche eine Körperebene aufspannen, wenigstens einen an dem Körperabschnitt vorgesehenen Montageabschnitt zur Montage an einem entsprechenden Regalfach und einen bezogen auf die Breitenrichtung gegenüber dem wenigstens einem Montageabschnitt an dem Körperabschnitt vorgesehenen Kammbereich mit einer Mehrzahl von Kammabschnitten umfasst, welche dazu eingerichtet sind, jeweils einzeln aus der Körperebene heraus verbiegbar zu sein.

Mittels dieser Konstruktion wird die Möglichkeit geschaffen, entsprechende Ausnehmungen in Regalflächen abzudecken und im Bereich von Diagonal-Fachwerkstreben oder anderen in den Ausnehmungen verlaufenden Objekten die entsprechenden Kammabschnitte aus der Ebene des Wärmeblechs heraus zu biegen, um entsprechende komplementäre Freiräume in der abzudeckenden Ebene zu schaffen. Anders ausgedrückt besteht die Funktion der Kammabschnitte darin, dass in dem Kammbereich des erfindungsgemäßen Wärmestaublechs Einschnitte eingefügt werden, welche an einer entsprechenden Störkontur, wie beispielsweise den bereits angesprochenen Diagonal-Fachwerkstreben, ein Umbiegen einer geeigneten Anzahl aus der Mehrzahl von Kammabschnitten des Wärmestaublechs ermöglichen.

Hierbei können erfindungsgemäß der Körperabschnitt und der Kammbereich mit seinen Kammabschnitten einteilig ausgebildet sein, insbesondere aus einem einzelnen metallischen Blechteil. Alternativ wäre selbstverständlich jedoch auch denkbar, den Körperabschnitt und die Kammabschnitte bzw. den Kammbereich mittels zweier separater, miteinander verbundener Bauteile bereitzustellen, welche beispielsweise mittels einer Vernietung oder Verschraubung verbunden sein können, so dass in derartigen Ausführungsformen der Kammbereich an den Körperabschnitt genietet oder geschraubt wäre.

Wie bereits weiter oben angedeutet, können die Kammabschnitte jeweils durch Einschnitte oder Perforierungen von ihren benachbarten Kammabschnitten getrennt sein, wodurch in beiden Fällen ein jeweiliges Umbiegen einzelner Kammabschnitte oder mehrerer benachbarter Kammabschnitte ermöglicht wird. Durch die individuelle Gestaltung der Einschnitte hinsichtlich ihrer Breite wird ein verbleibender Durchgangsquerschnitt durch das Wärmestaublech definiert, welcher jedoch bei einer geeignet schmalen Ausgestaltung der Einschnitte im Wesentlichen beliebig klein gemacht werden kann. Im Falle eines Vorsehens von Perforierungen zwischen benachbarten Kammabschnitten ist ferner Sorge dafür zu tragen, dass diese Perforierungen das Material weit genug schwächen, dass bei Installation eines entsprechenden Wärmestaublechs ein vereinfachtes Umbiegen der entsprechenden Kammabschnitte weiterhin möglich bleibt, da in diesem Fall zunächst einmal eine physische Trennung von umzubiegenden gegenüber nicht umzubiegenden Kammabschnitten von einem Monteur bewerkstelligt werden muss.

Ferner können für eine vereinfachte Installation eines erfindungsgemäßen Wärmestaublechs in den Übergangsbereichen zwischen dem Körperabschnitt und den Kammabschnitten jeweilige Schwächungsbereiche vorgesehen sein, insbesondere Durchbrechungen, Perforierungen und/oder Bereiche mit verminderter Materialstärke, um das Verbiegen der Kammabschnitte gegenüber dem Körperabschnitt zu erleichtern. Entsprechend wird durch die genannten Modifizierungen in den Übergangsbereichen jeweils eine gewünschte vorbestimmte Biegestelle definiert, welche einem Monteur des Wärmestaublechs das entsprechende Umbiegen der Kammabschnitte erleichtern wird.

Erfindungsgemäß ist der wenigstens eine Montageabschnitt durch wenigstens einen sich in Breitenrichtung von dem Körperabschnitt erstreckenden Montagevorsprung gebildet, welcher gegenüber dem Körperschnitt gebogen oder verbiegbar ist. Ein derartiger Montagevorsprung ist dementsprechend in eine an dem Regallager vorzusehende Öffnung, wie beispielsweise ein Langloch, einzuführen, wodurch ein Verkanten oder Verklemmen des Wärmestaublechs an dem Regallager in einer werkzeugfreien und einfachen Art und Weise ermöglicht wird.

Hierbei kann insbesondere die Biegung des wenigstens einen Montagevorsprungs gegenüber dem Körperabschnitt eine Z-förmige Kurve beschreiben, so dass sich das Wärmestaublech selbst in Position halten wird und keine weitere Befestigung an angrenzenden Elementen benötigt wird. Alternativ oder zusätzlich können ferner eine Mehrzahl von in Längsrichtung des Körperabschnitts beabstandeten Montagevorsprüngen vorgesehen sein, um zusätzlich ein unerwünschtes Verkanten des Wärmestaublechs von vornherein auszuschließen.

Entsprechend der hier diskutierten Merkmale und möglichen Weiterbildungen des Wärmestaublechs zeigt sich, dass dieses nicht nur eine einfache und zuverlässige Montage und Inbetriebnahme ermöglicht, sondern auch unabhängig von den damit zusammen verwendeten Regaltypen und Varianten einsetzbar ist. Dementsprechend wird eine universell einsetzbare Lösung für die oben angesprochene technische Aufgabe geschaffen, die sich in der angesprochenen Weise durch ihre Einfachheit, Montagefreundlichkeit und die damit verbundenen niedrigen Kosten auszeichnet.

Wie bereits beschrieben, betrifft die hier vorliegende Erfindung ein Regallager mit einer Mehrzahl von Lagerebenen, umfassend eine Mehrzahl von die Lagerebenen bildenden Regalfächern, welche abschnittsweise durch Ausnehmungen durchbrochen sind, und wenigstens ein Wärmestaublech der oben beschriebenen Art, welches derart an einem der Regalfächer montiert ist, dass sich der Kammabschnitt und gegebenenfalls wenigstens abschnittsweise der Körperabschnitt über die entsprechende Ausnehmung erstrecken, wobei die im Bereich von in der Ausnehmung befindlichen Objekten liegenden Kammabschnitte aus der Ebene der verbleibenden Kammabschnitte herausgebogen sind.

Wie bereits angesprochen, kann es sich bei den genannten Ausnehmungen um Ständerbereiche handeln, in welchen Diagonal-Fachwerkstreben verlaufen, welche dementsprechend den ebenfalls gerade erwähnten Objekten entsprechen.

Ferner ist der entsprechenden Lagerebene wenigstens ein Langloch zugeordnet, welches dazu eingerichtet ist, den wenigstens einen Montagevorsprung aufzunehmen.

Zuletzt sei auch darauf hingewiesen, dass wenngleich in manchen Ausführungsformen der Erfindung eine entsprechende Ausnehmung bereits mittels eines einzelnen Wärmestaublechs überdeckt sein kann, so jedoch in alternativen Varianten in einem Regallager auch wenigstens zwei Wärmestaubleche vorgesehen sein können, welche sich für ein Überdecken einer einzelnen Ausnehmung gegenüberliegen. Dementsprechend erstrecken sich die beiden angesprochenen Wärmestaubleche von beiden Seiten der Ausnehmung von jeweiligen Rändern der entsprechenden Regalfläche aufeinander zu und treffen sich mittig über der Ausnehmung ggf. mit einem geringen Abstand, welcher ebenfalls zum verbleibenden Rest-Durchgangsquerschnitt der Ausnehmung beiträgt und daher vorzugsweise klein gewählt werden sollte.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Figur 1: ein Wärmestaublech zum Einsatz in einem erfindungsgemäßen Regallager in einer Draufsicht;
- Figur 2: das Wärmestaublech aus Figur 1 während seiner Montage an einem Regalfach in zwei isometrischen Ansichten,
- Figur 3: der Montagevorgang aus Figur 2 in zwei Querschnittsansichten;
- Figur 4: ein erfindungsgemäßes Regallager, umfassend zwei Wärmestaubleche gemäß Figur 1 in einer isometrischen Ansicht;
- Figur 5: eine vergrößerte Ansicht eines Teils des Regallagers aus Figur 4; und
- Figur 6: eine Detailansicht der Wärmestaubleche des Regallagers aus Figur 4.

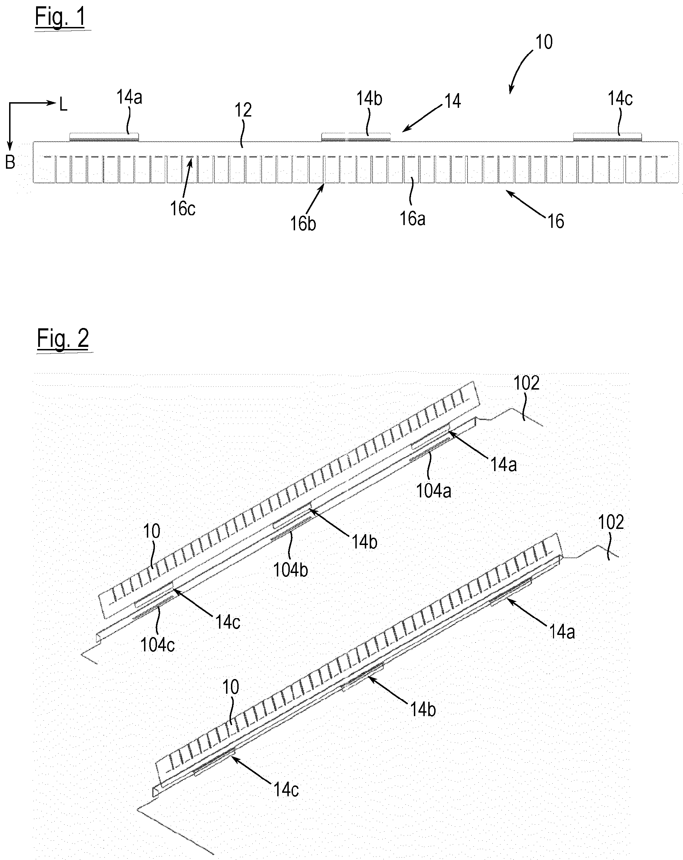

In Figur 1 ist zunächst ein Wärmestaublech zum Einsatz in einem erfindungsgemäßen Regallager in einer Draufsicht gezeigt und ganz allgemein mit dem Bezugszeichen 10 bezeichnet. Es umfasst einen Körperabschnitt 12 mit einer Längsrichtung L und einer Breitenrichtung B, welche zusammen eine Körperebene aufspannen, auf welche in der Ansicht aus Figur 1 genau senkrecht geblickt wird.

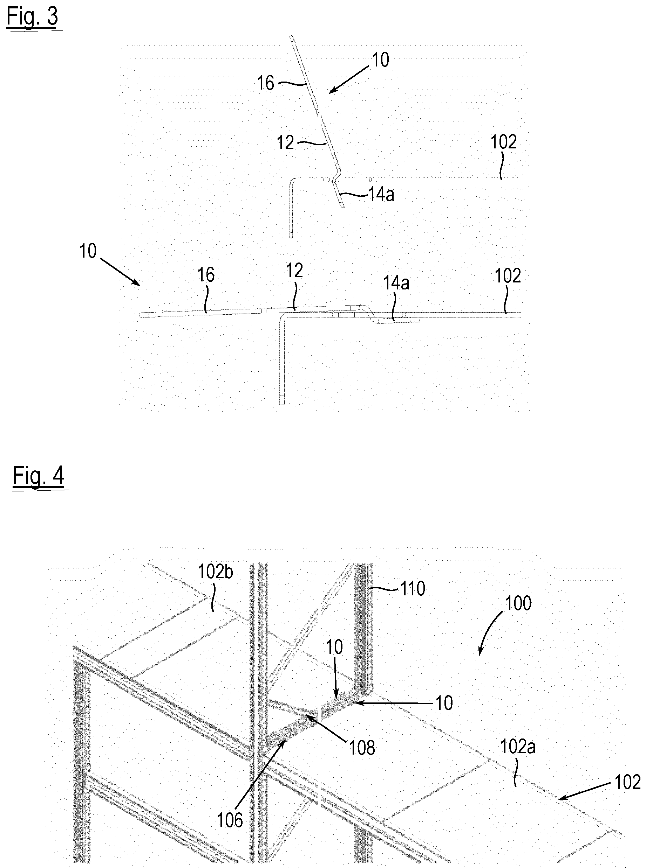

Weiterhin umfasst das Wärmestaublech 10 einen an dem Körperabschnitt 12 vorgesehenen Montageabschnitt 14, welcher durch insgesamt drei Montagevorsprünge 14a bis 14c gebildet ist, welche sich in Breitenrichtung B von dem Körperabschnitt 12 weg erstrecken. Hierbei sind die Montagevorsprünge 14a bis 14c abschnittsweise aus der Körperebene heraus verbogen, wie weiter unten im Zusammenhang mit den Figuren 2 und 3 noch näher erläutert werden wird.

Zudem umfasst das Wärmestaublech 10 einen bezogen auf die Breitenrichtung B gegenüber dem Montageabschnitt 14 einteilig mit dem Körperabschnitt 12 vorgesehenen Kammbereich 16 mit einer Mehrzahl von Kammabschnitten 16a. Die Kammabschnitte 16a sind hierbei jeweils durch, verglichen mit der Ausdehnung der Kammabschnitte 16a, in Längsrichtung L sehr schmal gebildete Einschnitte 16b getrennt, so dass der Kammbereich 16 nur einen bezogen auf seine Gesamtfläche sehr geringen Durchgangsquerschnitt aufweist, wie in der Draufsicht aus Figur 1 zu erkennen ist.

Weiterhin sind in den Übergangsbereichen zwischen dem Körperabschnitt 12 und den Kammabschnitten 16a jeweilige Schwächungsbereiche 16c vorgesehen, welche in dem hier gezeigten Ausführungsbeispiel jeweils ebenfalls durch Durchbrechungen gebildet sind und welche ein Verbiegen der einzelnen Kammabschnitte 16a gegenüber dem Körperabschnitt 12 aus der Körperebene heraus vereinfachen.

Unter Bezugnahme auf die Figuren 2 und 3 sei nunmehr der Vorgang einer Montage des Wärmestaublechs 10 an einem Regalfach 102 des weiter unten im Zusammenhang mit den Figuren 4 bis 6 noch weiter beschriebenen Regallagers 100 erläutert.

Hierbei ist in Figur 2 zu erkennen, dass dem Regalfach 102 in seinem Randbereich drei Langlöcher 104a bis 104c zugeordnet sind, welche gemäß ihrer Abmessungen und Abstände den Montagevorsprüngen 14a bis 14c des Wärmestaublechs 10 entsprechen. Somit ist ein Einführen des Wärmestaublechs 10 in die Regalfläche 102 ermöglicht für eine Montage daran ermöglicht, wie jeweils durch den Übergang der oberen zu der unteren Abbildung in den Figuren 2 und 3 deutlich wird.

Da ferner die Montageabschnitte 14a bis 14c gegenüber dem Körperabschnitt 12 des Wärmestaublechs 10 eine Z-förmige Kurve beschreiben, wie am besten in der Querschnittsansicht aus Figur 3 zu erkennen ist, wird sich das Wärmestaublech 10 in einem Zustand an der Regalfläche 102 verklemmen, in welchem sich der Kammbereich 16 und ein Teil des Körperabschnitts 12 in Verlängerung des Regalfachs 102 auskragen. Dieser Zustand ist in den Figuren 2 und 3 jeweils in der unteren Abbildung dargestellt. Dementsprechend wird hierbei das Wärmestaublech 10 eine Verlängerung des Regalfachs 102 über dessen in Figur 3 linkes Ende hinaus bilden und kann insbesondere eine Ausnehmung zu einem hier nicht gezeigten, links benachbarten weiteren Abschnitt des Regalfachs 102 überdecken.

Ein derartiger Zustand ist in Figur 4 nachvollziehbar, in welcher ein Abschnitt des Regallagers 100 in einer isometrischen Ansicht gezeigt ist. Dieses Regallager 100 umfasst eine Mehrzahl von Lagerebenen, von welchen in der hier gewählten Ansicht jedoch lediglich das bereits angesprochene Regalfach 102 zu sehen ist, welches durch die bereits angedeutete Ausnehmung 106 in Form eines Ständerbereichs durchbrochen ist, so dass zwei Teile 102a und 102b des Regalfachs mit der Ausnehmung 106 dazwischen vorgesehen sind. In diesem Ständerbereich 106 verläuft nun eine Diagonal-Fachwerkstrebe 108, welche schräg zwischen einander gegenüberliegenden Regalstehern 110 verläuft, um dem Regallager 100 in dieser Weise eine erhöhte Stabilität zu verleihen.

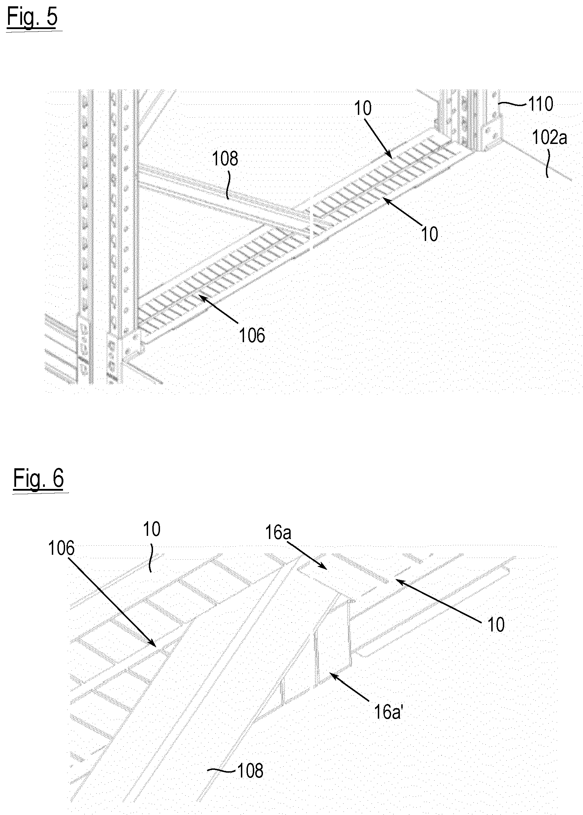

Um nun die Ausnehmung 106 aus Brandschutzgründen überdecken zu können und hierbei dennoch die Durchführung der Diagonal-Fachwerkstrebe 108 zu ermöglichen, sind einander gegenüberliegend zwei Wärmestaubleche 10 der oben beschriebenen und in den Figuren 1 bis 3 gezeigten Art montiert, wie insbesondere aus der vergrößerten Ansicht aus Figur 5 deutlich wird. Die beiden Wärmestaubleche 10 sind hierbei jeweils mittels ihrer Montageabschnitte 14 beiderseits der Ausnehmung 106 an den einander gegenüberliegenden Teilen 102a und 102a des Regalfachs 102 in der oben beschriebenen Weise angebracht und verklemmt.

Hierbei ist in Figur 5 zu erkennen, dass dementsprechend die Ausnehmung 106 fast vollständig durch die beiden Wärmestaubleche 10 überdeckt ist und lediglich ein schmaler Abstand zwischen den beiden Wärmestaublechen 10 sowie die darin vorgesehenen Einschnitte 16b als effektiver Durchgangsbereich für Luft verbleiben.

Zuletzt sei nun auf Figur 6 verwiesen, welche in einer isometrischen Ansicht von schräg unten denjenigen Bereich der Ausnehmung 106 zeigt, in welchem die Diagonal-Fachwerkstrebe 108 schräg durch die Ausnehmung 106 hindurch verläuft. Hierbei ist zu erkennen, dass eine Anzahl von Kammabschnitten 16a' nach unten aus der Körperebene herausgebogen worden sind, um das Hindurchlaufen der Diagonal-Fachwerkstrebe 108 zwischen den verbleibenden, nicht verbogenen und dementsprechend weiterhin in der Körperebene des Wärmestaublechs 10 liegenden Kammabschnitten 16a zu ermöglichen.

Ferner ist in Figur 6 zu erkennen, dass die Diagonal-Fachwerkstrebe 108 nicht zentral durch die Ausnehmung 106 verläuft, sondern in Richtung des in Figur 5 rechten Teils 102a des Regalfachs 102 verlagert ist. Dementsprechend ist auch lediglich bei dem rechten der beiden Wärmestaubleche 10 ein entsprechendes Verbiegen der Kammabschnitte 16a' notwendig geworden, während die Kammabschnitte 16a des in Figur 5 linken Wärmestaublechs 10 sämtlich unverbogen bleiben können, was jedoch die Funktionsweise davon in keiner Weise beeinträchtigt.

## Patentansprüche

1. Regallager (100) mit einer Mehrzahl von Lagerebenen, umfassend:
- eine Mehrzahl von die Lagerebenen bildenden Regalfächern (102), welche abschnittsweise durch Ausnehmungen (106) durchbrochen sind; und
- wenigstens ein Wärmestaublech (10), umfassend:
- einen Körperabschnitt (12) mit einer Längsrichtung (L) und einer Breitenrichtung (B), welche eine Körperebene aufspannen;
- wenigstens einen an dem Körperabschnitt (12) vorgesehenen Montageabschnitt (14) zur Montage an einem entsprechenden Regalfach; und
- einen bezogen auf die Breitenrichtung (B) gegenüber dem wenigstens einen Montageabschnitt (14) an dem Körperabschnitt (12) vorgesehenen Kammbereich (16) mit einer Mehrzahl von Kammabschnitten (16a), welche dazu eingerichtet sind, jeweils einzeln aus der Körperebene heraus verbiegbar zu sein,
welches derart an einem der Regalfächer (102) montiert ist, dass sich die Kammabschnitte (16a) und ggf. wenigstens abschnittsweise der Körperabschnitt (12) über die entsprechende Ausnehmung (106) erstrecken,
wobei die im Bereich von in der Ausnehmung (106) befindlichen Objekten (108) liegenden Kammabschnitte (16a') aus der Ebene der verbleibenden Kammabschnitte (16a) herausgebogen sind,
**dadurch gekennzeichnet, dass** der wenigstens eine Montageabschnitt (14) durch wenigstens einen sich in Breitenrichtung (B) von dem Körperabschnitt (12) erstreckenden Montagevorsprung (14a - 14c) gebildet ist, welcher gegenüber dem Körperabschnitt (12) gebogen und/oder verbiegbar ist, und
der entsprechenden Lagerebene wenigstens ein Langloch (104a - 104c) zugeordnet ist, welches dazu eingerichtet ist, den wenigstens einen Montagevorsprung (14a - 14c) aufzunehmen.

2. Regallager (100) nach Anspruch 1,
wobei der Körperabschnitt (12) und der Kammbereich (16) einteilig ausgebildet sind, insbesondere aus einem einzelnen metallischen Blechteil.

3. Regallager (100)nach Anspruch 1.
wobei der Kammbereich (16) an den Körperabschnitt (12) genietet oder geschraubt ist.

4. Regallager (100)nach einem der vorhergehenden Ansprüche,
wobei die Kammabschnitte (16a) jeweils durch Einschnitte (16b) oder Perforierungen von ihren benachbarten Kammabschnitten (16a) getrennt sind.

5. Regallager (100)nach einem der vorhergehenden Ansprüche,
wobei in den Übergangsbereichen zwischen dem Körperabschnitt (12) und den Kammabschnitten (16a) jeweilige Schwächungsbereiche (16c) vorgesehen sind, insbesondere Durchbrechungen, Perforierungen und/oder Bereiche mit verminderter Materialstärke, um das Verbiegen der Kammabschnitte (16a) gegenüber dem Körperabschnitt (12) zu erleichtern.

6. Regallager (100)nach einem der vorhergehenden Ansprüche,
wobei die Biegung des wenigstens einen Montagevorsprungs (14a - 14c) gegenüber dem Körperabschnitt (12) eine Z-förmige Kurve beschreibt.

7. Regallager (100)nach einem der vorhergehenden Ansprüche,
wobei eine Mehrzahl von in Längsrichtung des Körperabschnitts (12) beabstandeten Montagevorsprüngen (14a - 14c) vorgesehen sind.

8. Regallager (100) nach einem der vorhergehenden Ansprüche,
wobei es sich bei den Ausnehmungen (106) um Ständerbereiche handelt, in welchen Diagonal-Fachwerkstreben (108) verlaufen.

9. Regallager (100) nach einem der vorhergehenden Ansprüche,
umfassend wenigstens zwei Wärmestaubleche (10), welche sich für ein Überdecken einer einzelnen Ausnehmung (106) gegenüberliegen.

## Claims

1. Racking system (100) with a plurality of storage levels, comprising:
- a plurality of shelf compartments (102) forming the storage levels, which are partially perforated by recesses (106); and
- at least one heat retention baffle (10), comprising:
- a body section (12) having a longitudinal direction (L) and a width direction (B) which define a body plane;
- at least one mounting section (14) provided on the body section (12) for mounting on a corresponding shelf compartment; and
- a comb region (16) provided on the body section (12) opposite the at least one mounting section (14) relative to the width direction (B), comprising a plurality of comb sections (16a) which are arranged to be bendable individually out of the body plane, which is mounted on one of the shelf compartments (102) in such a way that the comb sections (16a) and, where applicable, at least parts of the body section (12) extend over the corresponding recess (106),
wherein the comb sections (16a') located in the region of objects (108) situated within the recess (106) are bent out of the plane of the remaining comb sections (16a),
**characterised in that** the at least one mounting section (14) is formed by at least one mounting projection (14a - 14c) extending in the width direction (B) from the body section (12) which is bent and/or bendable relative to the body section (12), and at least one elongated hole (104a - 104c) is associated with the corresponding storage level, which is adapted to receive the at least one mounting projection (14a - 14c).

2. Racking system (100) according to claim 1,
wherein the body section (12) and the comb region (16) are formed in one piece, in particular from a single sheet metal part.

3. Racking system (100) according to claim 1,
wherein the comb region (16) is riveted or screwed to the body section (12).

4. A racking system (100) according to any of the preceding claims,
wherein the comb sections (16a) are each separated from their adjacent comb sections (16a) by incisions (16b) or perforations.

5. Racking system (100) according to any of the preceding claims,
wherein respective weakening zones (16c) are provided in the transition regions between the body section (12) and the comb sections (16a), in particular openings, perforations and/or zones with reduced material thickness, in order to facilitate the bending of the comb sections (16a) relative to the body section (12).

6. Racking system (100) according to any of the preceding claims,
wherein the bending of the at least one mounting projection (14a - 14c) relative to the body section (12) describes a Z-shaped curve.

7. Racking system (100) according to any of the preceding claims,
wherein a plurality of mounting projections (14a - 14c) spaced apart in the longitudinal direction of the body section (12) are provided.

8. Racking system (100) according to any of the preceding claims,
wherein the recesses (106) are upright regions through which diagonal truss struts (108) extend.

9. Racking system (100) according to any of the preceding claims,
comprising at least two heat retention baffles (10) which face each other to cover a single recess (106).

## Revendications

1. Un rayonnage (100) comportant une pluralité de niveaux de stockage, comprenant :
- une pluralité de compartiments de rayonnage (102) formant les niveaux de stockage, qui sont percés par endroits par des évidements (106) ; et
- au moins une tôle d'accumulation de chaleur (10), comprenant :
- une section de corps (12) ayant une direction longitudinale (L) et une direction de largeur (B) qui définissent un plan de corps ;
- au moins une section de montage (14) prévue sur la section de corps (12) pour le montage sur un compartiment de rayonnage correspondant ; et
- une région de peigne (16) prévue sur la section de corps (12) en face de ladite au moins une section de montage (14) par rapport à la direction de largeur (B), comportant une pluralité de sections de peigne (16a) qui sont agencées de manière à être pliées individuellement hors du plan du corps,
lequel est monté sur l'un des compartiments d'étagère (102) de telle sorte que les sections de peigne (16a) et, le cas échéant, au moins par sections, la section de corps (12) s'étendent au-dessus de l'évidement correspondant (106),
dans lequel les sections de peigne (16a') situées dans la zone des objets (108) se trouvant dans l'évidement (106) sont courbées hors du plan des sections de peigne restantes (16a),
**caractérisé en ce que** ladite au moins une section de montage (14) est formée par au moins une saillie de montage (14a - 14c) s'étendant dans le sens de la largeur (B) à partir de la section de corps (12), laquelle saillie est courbée et/ou peut être courbée par rapport à la section de corps (12), et
au moins un trou oblong (104a - 104c) est associé au plan de position correspondant, lequel trou oblong est agencé pour recevoir ladite au moins une saillie de montage (14a - 14c).

2. Le rayonnage (100) selon la revendication 1,
dans lequel la section de corps (12) et la région de peigne (16) sont réalisées d'un seul tenant, en particulier à partir d'une seule pièce de tôle métallique.

3. Le rayonnage (100) selon la revendication 1,
dans lequel la région de peigne (16) est rivetée ou vissée à la section de corps (12).

4. Le rayonnage (100) selon l'une des revendications précédentes,
dans lequel les sections de peigne (16a) sont séparées les unes des autres par des entailles (16b) ou des perforations.

5. Le rayonnage (100) selon l'une des revendications précédentes,
dans lequel des zones d'affaiblissement (16c) sont prévues dans les zones de transition entre la section de corps (12) et les sections de peigne (16a), en particulier des découpes, des perforations et/ou des zones d'épaisseur de matériau réduite, afin de faciliter la flexion des sections de peigne (16a) par rapport à la section de corps (12).

6. Le rayonnage (100) selon l'une des revendications précédentes,
dans lequel la courbure de ladite au moins une saillie de montage (14a - 14c) par rapport à la section de corps (12) décrit une courbe en forme de Z.

7. Le rayonnage (100) selon l'une des revendications précédentes,
dans lequel une pluralité de saillies de montage (14a - 14c) espacées dans le sens longitudinal de la section de corps (12) sont prévues.

8. Le rayonnage (100) selon l'une des revendications précédentes,
dans lequel les évidements (106) sont des zones de montants dans lesquelles s'étendent des entretoises diagonales (108).

9. Le rayonnage (100) selon l'une des revendications précédentes,
comprenant au moins deux tôles d'accumulation de chaleur (10) qui se font face pour recouvrir un seul évidement (106).
